# EUROPEAN PATENT SPECIFICATION

(11) **EP 3 318 383 B1**
(45) Date of publication and mention of the grant of the patent: **08.01.2020**
(21) Application number: 17199969.1
(22) Date of filing: 03.11.2017
(51) Int. Cl.: B29C 45/14, B29C 65/36, B65B 9/20, B65B 9/22, B65B 41/16, B65B 51/22, B65B 51/30, H05B 6/10, H05B 6/36, B29C 65/74

(54) **METHOD FOR MANUFACTURING AN INDUCTION SEALING HEAD FOR AN AUTOMATIC MACHINE**
VERFAHREN ZUR HERSTELLUNG EINES INDUKTIONSVERSIEGELUNGSKOPFES FÜR EINE AUTOMATISCHE MASCHINE
PROCÉDÉ DE FABRICATION D'UNE TÊTE DE SCELLAGE PAR INDUCTION DESTINÉE À UNE MACHINE AUTOMATIQUE

(30) Priority: 03.11.2016 IT 201600110556
(43) Date of publication of application: 09.05.2018
(73) Proprietor: G.D SOCIETA' PER AZIONI, 40133 Bologna (IT)
(72) Inventor: CARBONI, Salvatore, 40135 Bologna (IT); VITALI, Antonio, 40062 Molinella (IT); BIONDI, Andrea, 40133 Bologna (IT)
(74) Representative: Marchitelli, Mauro

(56) References cited:
- EP-A1- 2 468 480
- EP-A1- 2 781 325
- DE-B3-102014 119 700

## Description

### TECHNICAL FIELD

The present invention relates to a method for manufacturing an induction sealing head for an automatic machine.

The present invention finds advantageous application in an automatic machine for filling containers for pourable products, to which the present description will make explicit reference without any loss of generality.

### PRIOR ART

For many years, containers (disposable or re-closable) have been available on the market, which are made by bending and sealing a multilayer wrapping sheet (that is, formed by layers of different materials coupled together) and are used for the distribution of pourable products (i.e. fluid products being formless and therefore taking the form of the object in which they are contained, said fluid products can be liquid, powdery, granular or semi-solid). These containers can generally be used for the distribution of foodstuff products (for example wine, milk, fruit juices, syrups, drinks, sauces, creams, yoghurt, puree, preserved products, vegetables, legumes, canned tomatoes...).

By way of example, the multilayer wrapping sheet is formed by an outer layer made of transparent polyethylene (heat-sealable as it melts at relatively low temperatures), a subsequent structural layer made of cardboard, a subsequent aluminium barrier layer, and an inner layer made of transparent polyethylene (heat-sealable as it melts at relatively low temperatures).

A common container for pourable products has a parallelepiped shape and has four side walls (two by two parallel and opposite each other) and two bottom walls, upper and lower, respectively, which are perpendicular to the four side walls. The container comprises a longitudinal seal and two cross seals, each of which is arranged at a respective bottom wall and has a sealing fin which is initially perpendicular to the respective bottom wall and is subsequently folded against the bottom wall by 90°; each bottom wall has at its ends two triangular wings (also called "ears") which can be folded against respective side walls or against the bottom wall itself. Typically, the triangular wings at the upper bottom wall are folded against respective side walls (and fixed to the side walls by means of heat-sealing) while the triangular wings at the lower bottom wall are folded against the lower bottom wall itself (and fixed to the lower bottom wall by means of heat-sealing).

For example, patent application EP2781325A1 describes a machine for forming and filling a container for pourable products by bending and heat-sealing a wrapping sheet (previously provided with pre-weakened folding lines) which is part of a strip of wrapping material (wound in a reel). The vertically arranged wrapping sheet is bent in a tube thus overlapping two opposed longitudinal edges which are heat-sealed on one another by means of a longitudinal seal and then a dose of pourable product is fed into the tube; finally, the tube is closed at the upper and lower part by means of two respective cross seals (which form two corresponding sealing fins having the four triangular wings) thus causing the forming of the container which initially has a *"cushion-like"* shape. Simultaneously with the forming of the seals, the wrapping sheet is cut crossly to separate the wrapping sheet from the strip of wrapping material (i.e. the *"cushion-like"* shaped container is formed by the bent and sealed wrapping sheet).

At the same time or later with the forming of the cross seals, the container can be shaped (for example by means of a pair of hollow shells which compress the container between each other thus imposing a predefined shape to the container) to assume a definitive parallelepiped shape (as initially the container assumes on a *"cushion-like"* shape).

According to what is described in the patent application EP2781325A1, the sealing device which performs the cross seal comprises an induction sealing head provided with a tubular (namely internally hollow) conductor element which is bent in a "U" shape so as to form two distinct and separate sealing areas between which a blade operates, which performs a transverse cut of the blank. The tubular conductor element is embedded in a support body made of a plastic material which is over-moulded around the tubular conductor body itself. The operating surface of the induction sealing head is partly formed by the tubular conductor element and partly by the support body and is substantially flat with the exception of a tooth (rib), which perpendicularly projects from the sealing device.

In order to make the induction sealing head, initially the tubular conductor element with a circular section is bent in a "U" shape, then the support body is over-moulded around the tubular element bent in a "U" shape, completely covering the tubular conductor element itself (namely the tubular conductor element is completely embedded in the support body), and finally part of the support body and part of the tubular conductor element are removed by milling so as to obtain the operating surface, which is substantially flat with the exception of a tooth (rib), which perpendicularly projects from the sealing device.

The above-described methods for manufacturing the induction sealing head have the disadvantage of producing a high quantity of *"noble"* materials which are discarded (in particular metallic materials making up the tubular conductor element, generally copper, which has a rather high cost); consequently, the above-described methods for manufacturing the induction sealing head determine a relatively high production cost of the sealing head.

### DESCRIPTION OF THE INVENTION

The object of the present invention is to provide a method for manufacturing an induction sealing head for an automatic machine, which manufacturing method is free from the drawbacks described above and, in particular, is easy and inexpensive to implement.

According to the present invention, a method is provided for manufacturing an induction sealing head for an automatic machine, as claimed in the appended claims.

### BRIEF DESCRIPTION OF THE DRAWINGS

The present invention will now be described with reference to the accompanying drawings, which illustrate an example of nonlimiting embodiment, wherein:
- Figure 1 is a perspective view of a container for pourable products;
- Figure 2 is a plan view of a wrapping sheet which is bent and heat-sealed to make the container of Figure 1;
- Figure 3 is a perspective view of the container of Figure 1 during the construction thereof, i.e. before the folding of the sealing fins and of the respective triangular wings;
- Figure 4 is a schematic view and with the removal of parts for clarity of a forming and filling machine which forms and fills the container of Figure 1 and is made according to the present invention;
- Figure 5 is a front perspective view and with the removal of parts for clarity of a sealing unit of the forming and filling machine of Figure 4;
- Figures 6 and 7 are two front perspective views and with the removal of parts for clarity of a detail of the sealing unit of Figure 5;
- Figure 8 is a front perspective view of an induction sealing head of the sealing unit of Figure 5;
- Figure 9 is a rear perspective view of the sealing head of Figure 8;
- Figure 10 is a front view of the sealing head of Figure 8;
- Figure 11 is an enlarged view of a detail of Figure 10;
- Figure 12 is a cross-sectional view of the sealing head of Figure 8;
- Figure 13 is a perspective view of a tubular conductor element of the sealing head of Figure 8;
- Figure 14 is a front view of a different embodiment of the sealing head of Figure 8;
- Figure 15 is an enlarged view of a detail of Figure 14;
- Figure 16 is a front view of a further embodiment of the sealing head of Figure 8;
- Figure 17 is an enlarged view of a detail of Figure 16;
- Figure 18 is a perspective view of a tubular conductor element with a circular section and a straight shape from which the tubular conductor element of Figure 13 is obtained; and
- Figures 19 and 20 are two schematic views of a tool used to shape the tubular conductor element with a circular section and a straight shape of Figure 18 to obtain the tubular conductor element of Figure 13.

### PREFERRED EMBODIMENT OF THE INVENTION

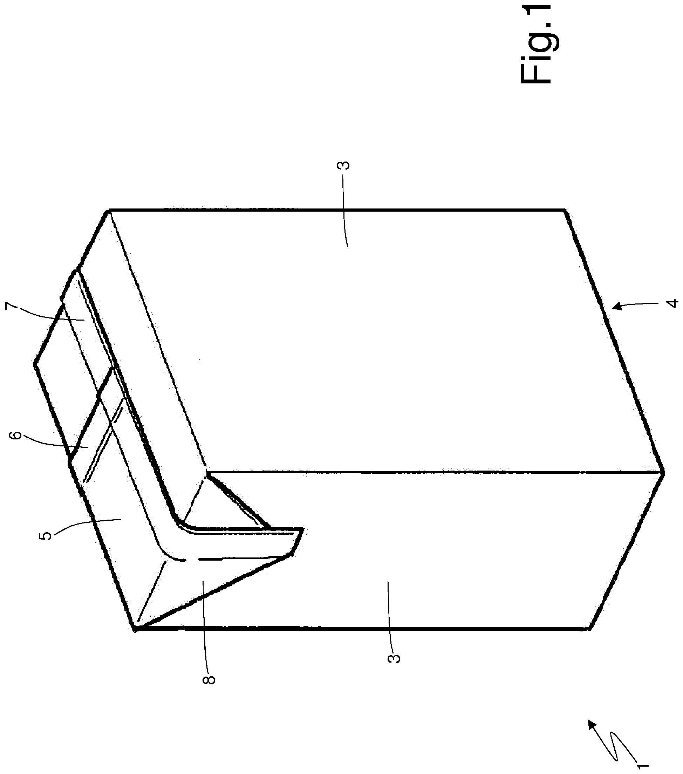

In Figure 1 number 1 denotes as a whole a container for pourable products that contains on the inside thereof a predetermined amount of a pourable product (i.e. a fluid product being formless and therefore can take the form of the object containing it, such as a liquid, powdery, granular or semi-solid product). The container 1 is generally used for the distribution of foodstuff products (for example wine, milk, fruit juices, syrups, drinks, sauces, creams, yoghurt, puree, preserved products, vegetables, legumes, canned tomatoes...).

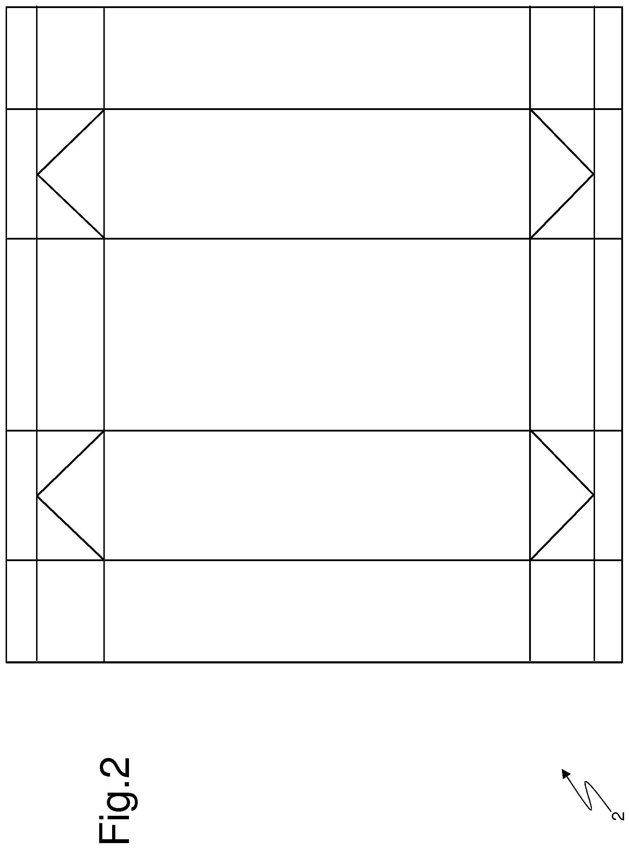

The container 1 is made by bending and sealing a multilayer wrapping sheet 2 (that is, formed from layers of different materials coupled together) illustrated in Figure 2. According to a possible and non-binding embodiment, the wrapping sheet 2 is obtained by an external layer made of transparent polyethylene (heat-sealable as it melts at relatively low temperatures), a subsequent structural layer made of cardboard, a subsequent barrier layer made of aluminium, and an inner layer of transparent polyethylene (heat-sealable as it melts at relatively low temperatures). According to a possible and non-binding embodiment, the wrapping sheet 2 is previously provided (typically by mechanical deformation performed with embossing rollers) with pre-weakened folding lines which guide the subsequent bending of the wrapping sheet 2 itself.

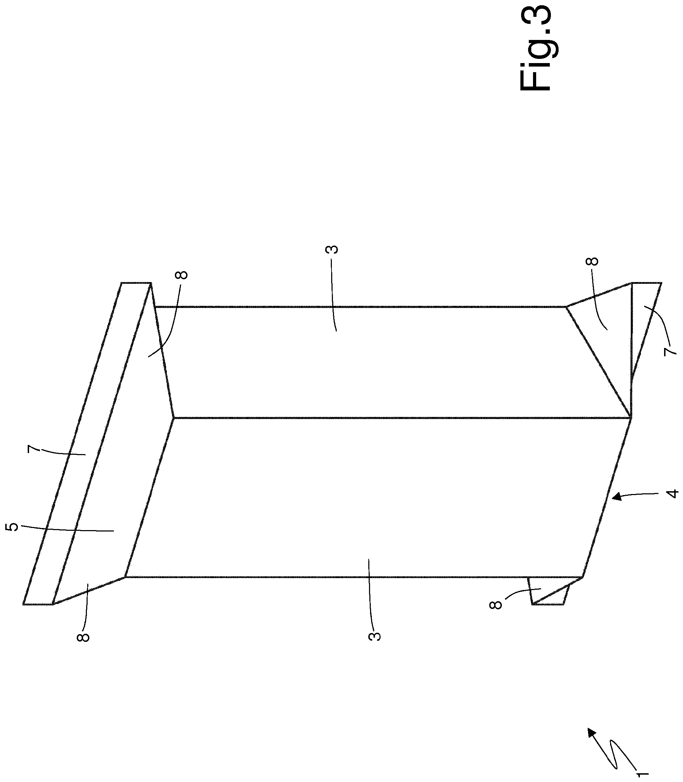

As illustrated in Figure 1, the container 1 has a parallelepiped shape and has four side walls 3 (two by two parallel and opposite each other) and two bottom walls 4 and 5 lower and upper, respectively, which are perpendicular to the four side walls 3. The container 1 comprises a longitudinal seal 6 and two cross seals 7, each of which is arranged at a respective bottom wall 4 or 5 and has a sealing fin which is initially perpendicular to the respective bottom wall 4 or 5 (as illustrated in Figure 3) and is then folded against the bottom wall 4 or 5 by 90° (as illustrated in Figure 1); each bottom wall 4 or 5 has at the ends of the same two triangular wings 8 (also called "*ears*") which can be folded against respective side walls 3 or against the bottom wall 4 or 5 itself. Typically, and as illustrated in Figure 1, the two triangular wings 8 of the upper bottom wall 5 are folded against respective side walls 3 (and fixed to the lateral walls 3 by means of heat-sealing) whereas the triangular wings 8 of the lower bottom wall 4 are folded against the lower bottom wall 4 itself (and fixed to the lower bottom wall 4 by means of heat-sealing).

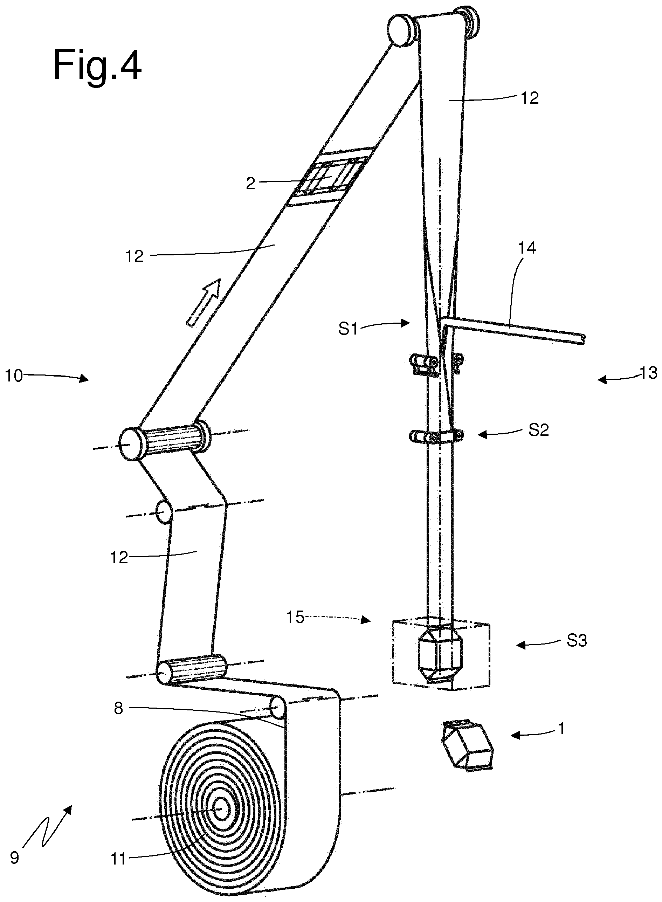

In Figure 4 number 9 denotes as a whole a forming and filling machine which forms and fills the container 1 illustrated in Figure 1 and described above.

The forming and filling machine 9 comprises a feeding conveyor 10 which unwinds a strip 12 of wrapping material containing a succession of wrapping sheets 2 from a reel 11. Downstream of the feeding conveyor 10 a filling conveyor 13 is arranged, which feeds the strip 12 of wrapping material through a bending station S1, in which the strip 12 of wrapping material is bent in a tubular shape and is provided with the longitudinal seal 6; in particular, in the bending station S1, two opposite longitudinal edges of the strip 12 of wrapping material are overlapped on one another and then heat-sealed one to the other. Furthermore, the filling conveyor 13 feeds the strip 12 of wrapping material bent in a tubular shape through a filling station S2, in which a product dose is fed into the strip 12 of wrapping material bent in a tubular shape (by using a feeding duct 14 which is coupled to the strip 12 of wrapping material upstream of the bending station S1 and eventuates at the filling station S2). Finally, the filling conveyor 13 feeds the strip 12 of wrapping material bent in a tubular shape through a sealing station S3 in which the strip 12 of wrapping material bent in a tubular shape is provided with two opposite cross seals 7 to define the container 1. Simultaneously with the forming of the cross seals 7 (i.e. in the sealing station S3), the container 1 is separated from the strip 12 of wrapping material by means of a cross cut; alternatively, the cross cut instead of being simultaneous with the cross sealing could be performed after the cross sealing.

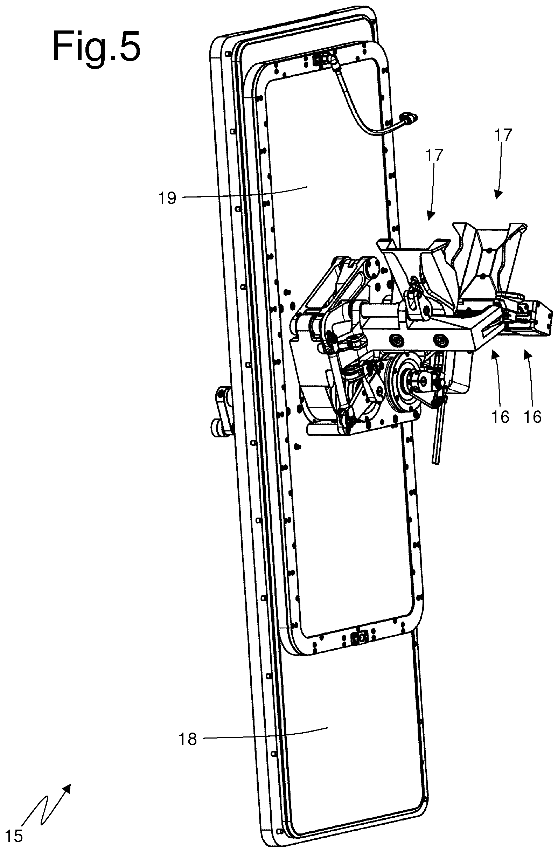

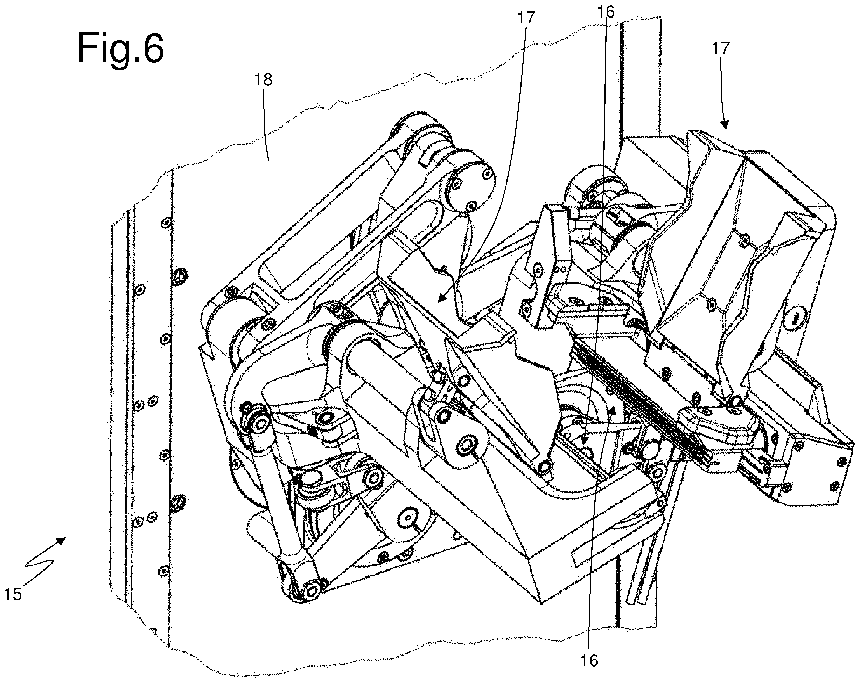

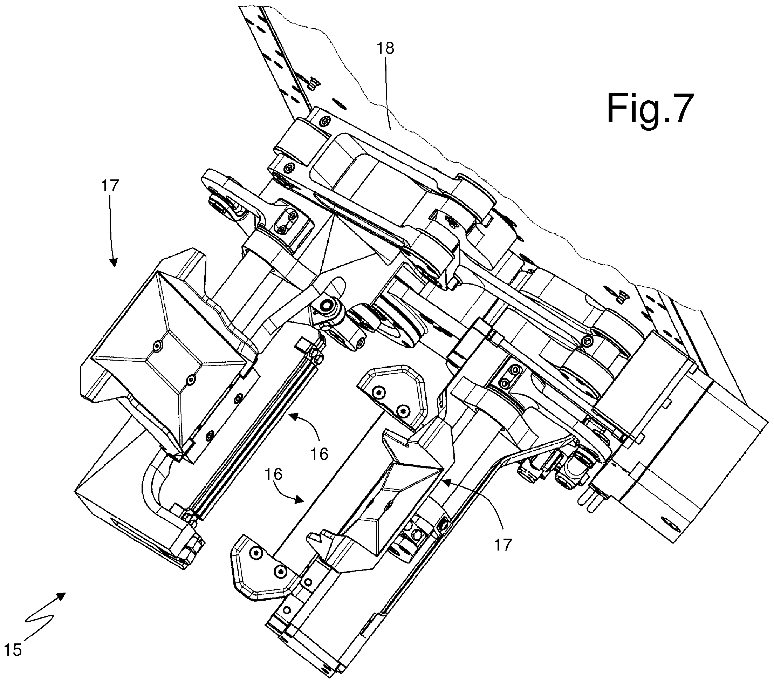

At the sealing station S3 a sealing unit 15 (schematically illustrated in Figure 4 and better illustrated in Figures 5 and 6 and 7) is arranged, which is provided with a pair of opposing induction sealing heads 16 which are cyclically pressed from opposite sides against the strip 12 of wrapping material bent in a tubular shape so as to clamp the strip 12 of wrapping material itself between them. The induction sealing heads 16 also support cutting elements to perform, together with the sealing, also the cross cutting of the strip 12 of wrapping material bent in a tubular shape. The sealing unit 15 also comprises a pair of hollow shells 17 which are movable together with the induction sealing heads 16 to embrace from opposite sides the strip 12 of wrapping material bent in a tubular shape so as to shape the strip 12 of wrapping material itself (i.e. in such a way as to give the strip 12 of wrapping material a definitive parallelepiped shape). In other words, together with the forming of the cross seals 7, the container 1 is shaped (by means of the pair of hollow shells 17 which compress the container 1 between them, thus imposing a predefined shape to the container 1) so as to assume a definitive parallelepiped shape (as initially the container 1 assumes a *"cushion-like"* shape).

As illustrated in Figure 5, the sealing unit 15 comprises a fixed part 18 rigidly mounted on the frame of the forming and filling machine 9 and a movable part 19 which moves, in use, relative to the fixed part 18 and is arranged facing the fixed part 18. In particular, the movable part 19 is formed by a slide which slides vertically relative to the fixed part 18 for example by means of the tracks obtained in the fixed part 18. In use, the movable part 19 cyclically slides back and forth (i.e. up and down) cyclically making a working stroke, along which the cross sealing of a container 1 is performed (still incorporated in the strip 12 of wrapping material bent in a tubular shape) following the continuous movement of the container 1 itself for a certain time, and a subsequent return stroke, along which no processing is performed and the movable part 19 is returned to the initial position to begin the processing of the next container 1.

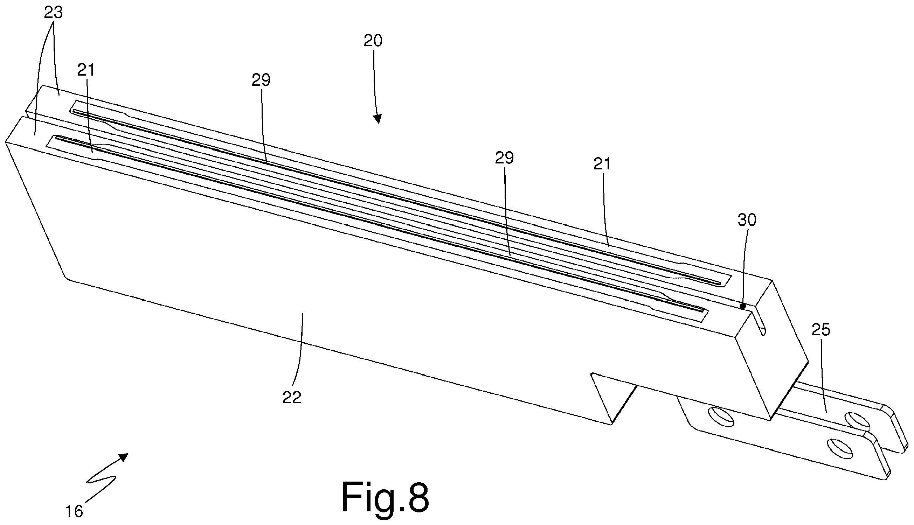

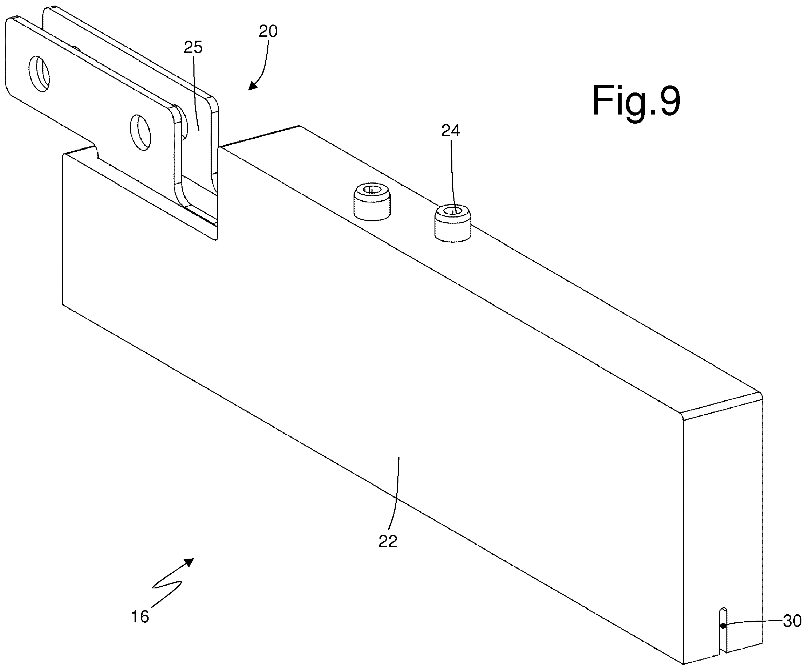

As illustrated in Figures 8 and 9, each induction sealing head 16 has a substantially parallelepiped shape and comprises a tubular conductor element 20 having two flat walls 21 in view (namely externally arranged and therefore completely visible from the outside) separated one from the other and side by side, each of which defines a sealing area. Furthermore, each sealing head 16 comprises a support body 22 made of insulating material (for example an epoxy resin based plastic material) which surrounds the tubular conductor element 20 and has a flat wall 23 in view (namely externally arranged and therefore completely visible from the outside) which is coplanar with the flat wall 21 and surrounds the flat walls 21 themselves.

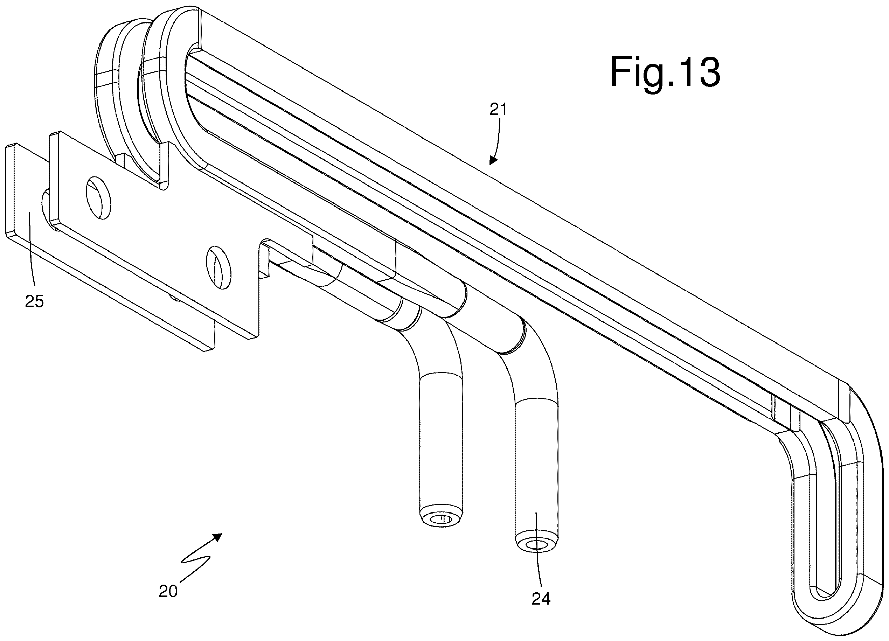

The tubular conductor element 20 has a relatively complex shape (well illustrated in Figure 13) and has two ends 24 (also shown in Figure 9) to which a hydraulic circuit is connected, adapt for circulating a cooling liquid inside the tubular conductor element 20; furthermore, two electric terminals 25 are coupled to the tubular conductor element 20, which are connected to an electric circuit adapt for circulating an alternating current with a relatively high frequency inside the tubular conductor element 20 which induces heat in the metallic layer of a multilayer wrapping sheet 2.

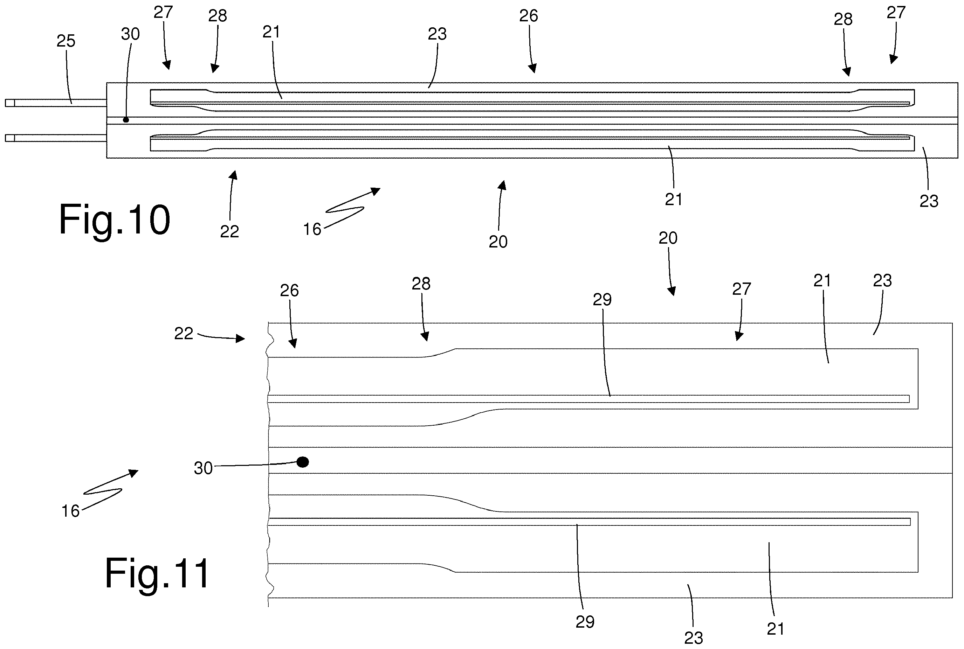

As better illustrated in Figures 10 and 11, each flat wall 21 of the tubular conductor element 20 has a single straight central portion 26 which comprises most of the flat wall 21 itself. Moreover, each flat wall 21 of the tubular conductor element 20 has two straight end portions 27 which are parallel and not aligned with the straight central portion 26 and two curved portions 28 which join the straight central portion to the two straight end portions 27; each curved portion 28 of each flat wall 21 is "S"-shaped for joining the corresponding portions 26 and 27 staggered one relative to the other. In other words, each flat wall 21 is "U"-shaped (namely has an arc shape), determined by being formed by the straight central portion 26 joined at the ends to the two straight end portions 27 which are staggered with respect to the straight central portion 26. It is important to note that each flat wall 21 comprises only three straight portions 26 and 27 and that the straight central portion 26 is more extended than the two straight portions 27 (indicatively the straight central portion 26 has an extension which is 7-14 times the extension of the two straight end portions 27).

The two straight end portions 27 of each flat wall 21 are arranged at the areas in which the wrapping sheet 2 making up the container 1 is bent in a "U" shape, namely at the areas in which the transition between "*in front*" and "*behind*" takes place.

As previously mentioned, the induction sealing head 16 is used to obtain the cross seal 7 of a container 1 which assumes a tubular shape thanks to a longitudinal seal 6 previously made; each curved portion 28 of each flat wall 21 of the tubular conductor element 20 faces towards the inside of the corresponding cross seal 7, namely inside the container 1 in which the cross seal 7 is made. Accordingly, the two flat walls 21 of the tubular conductor element 20 which are U-shaped have hollow portions having opposite orientations.

According to a preferred but non-binding embodiment, each straight end portion 27 of each flat wall 21 is misaligned relative to the straight central portion 26 of a distance smaller than the cross size of the flat wall 21; in other words, the misalignment of the straight portions 27 relative to the straight central portion 26 is smaller than the cross size of the flat wall 21.

According to a preferred embodiment, each flat wall 21 comprises a tooth 29 which perpendicularly projects from the flat wall 21, has a straight shape, and extends, in a straight manner, along the straight central portion 26, along the curved portions 28 and along the straight end portions 27 of the flat wall 21. In other words, each tooth 29 is perfectly straight even though the corresponding flat wall 21 being curved (namely "U"-shaped).

Each induction sealing head 16 centrally has a slot 30 which is formed in the support body 22, is arranged between the two flat walls 21 of the tubular conductor element 20 and is adapted to house the blade which performs the transverse cutting of the belt 12 of wrapping material.

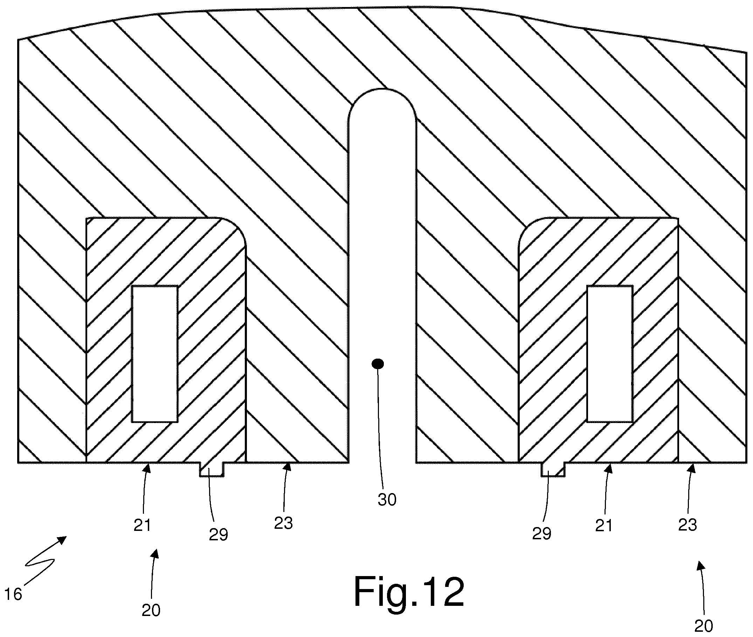

According to the embodiment illustrated in Figures 8-13, each flat wall 21 has a constant cross size, namely at each point of the flat wall 21 the cross size of the flat wall 21 is constant.

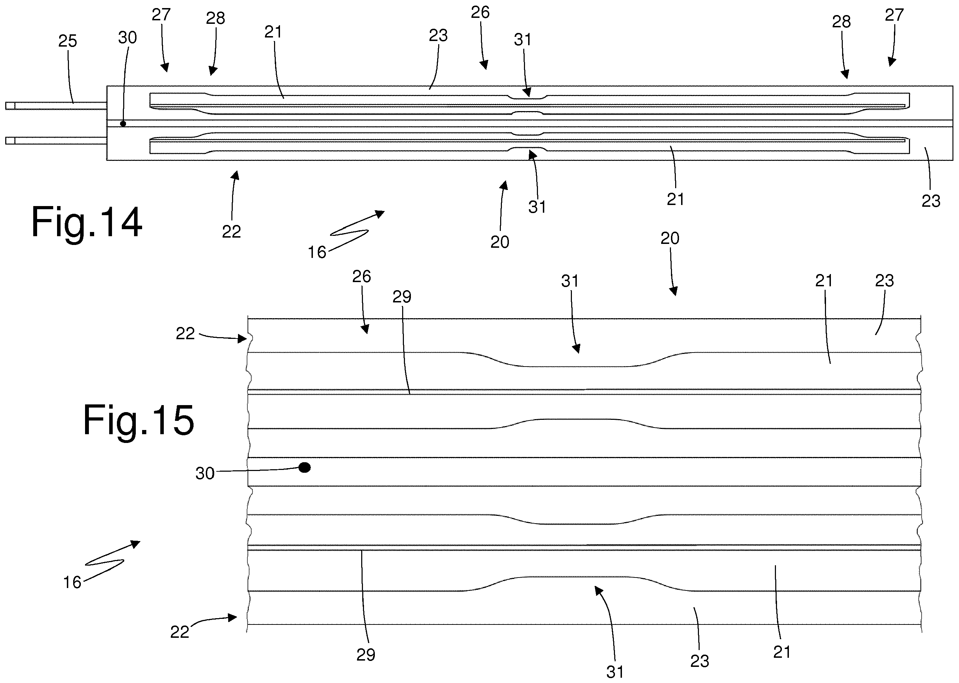

In the alternative embodiment illustrated in Figures 14 and 15, each flat wall 21 of the tubular conductor element 20 centrally has (namely at the straight central portion 26) a narrowing 31, which locally decreases the width of the flat wall 21 itself. In other words, each flat wall 21 of the tubular conductor element 20 centrally has (namely at the narrowing 31) a first width and has a laterally (namely outside the narrowing 31) a second width which is constant and greater than the first width; the ratio between the first width and the second width ranges between 40% and 75%.

As previously stated, each induction sealing head 16 is used to make a cross seal 7 of a container 1 which assumes a tubular shape thanks to a longitudinal seal 6 previously made; the narrowing 31 of each flat wall 21 is arranged at the longitudinal seal 6 of the container 1.

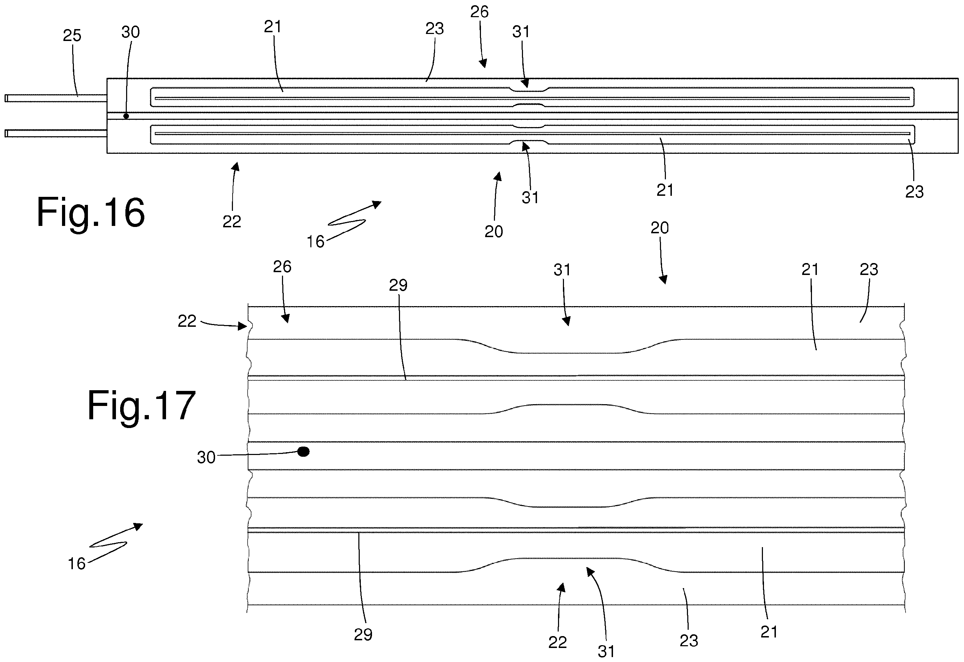

In the further embodiment illustrated in Figures 15 and 16, each flat wall 21 of the tubular conductor element 20 centrally has (namely at the straight central portion 26) the narrowing 31, but is devoid of the curved portions 28 (namely it is perfectly straight along its entire extension).

The above-described induction sealing head 16 has numerous advantages.

Firstly, the aforesaid induction sealing head 16 allows to obtain more resistant cross seals 7 particularly at the ends. At the ends, the width of the cross seals 7 is reduced significantly (even by 50-60%) with respect to the central area due to an inevitable deformation of the magnetic field produced by the electric current that circulates along the tubular conductor element 20 and which induces parasitic currents which are heating in the metal layer of the wrapping sheet 2. When the flat walls 21 of the tubular conductor element 20 are perfectly straight, at the ends the cross seals 7 are relatively weak (namely subject to breakage in the case of mechanical stress just more intense than normal when handling the containers) as much narrower than normal and symmetrically arranged between *"inside"* and *"outside"* of the containers 1. Instead, when the flat walls 21 of the tubular conductor element 20 are curved (as described above) at the ends, the cross seals 7 are always and inevitably narrower but they are also moved towards the inside of the containers 1, i.e. each cross seal 7 has at its ends an extent (width) almost normal towards the inside of the corresponding container 1 and has an almost null extent (width) towards the outside of the corresponding container 1; in this way, the seal capacity of the cross seals 7 at the ends is significantly increased even though the cross seals 7 at the ends have a reduced extent (width).

Moreover, the narrowing 31 of each flat wall 21 at the longitudinal seal 6 of the container 1 allows to intensify the heating action (namely the sealing action) at the longitudinal seal 6 to the advantage of making a cross seal 7 more robust; in fact, at the longitudinal seal 6 the wrapping sheet 2 is locally thicker as a result of the overlaps due to the longitudinal seal 6 and therefore requires a more intense heating to obtain a high quality sealing.

Finally, the above-described induction sealing head 16 is simple and inexpensive to manufacture, as compared to a similar induction sealing head 16 devoid of the curved portions 28 and/or the narrowing 31, it requires only a simple and fast mechanical shaping of the tubular conductor element 20.

The method for manufacturing the induction sealing head 16 described above is described in the following.

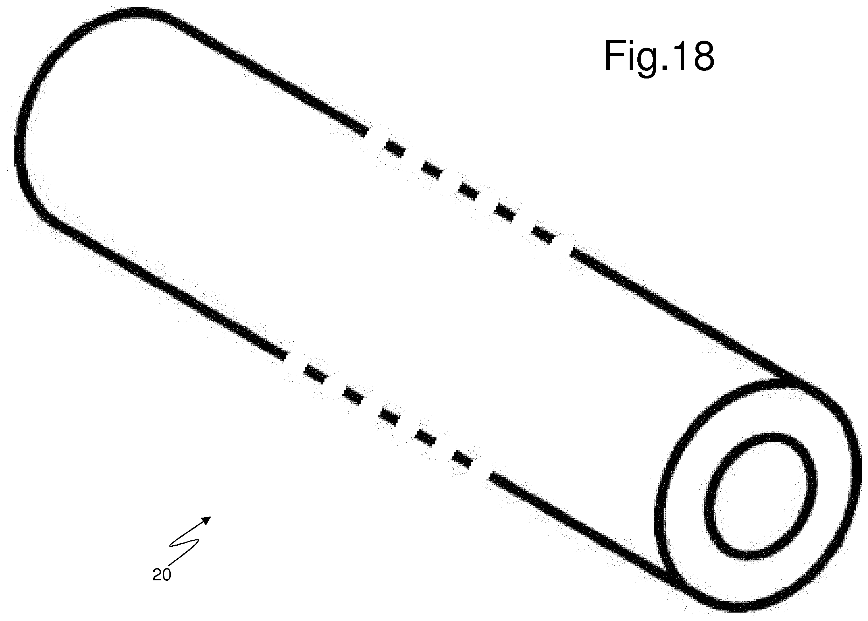

Initially, a tubular conductor element 20 with a circular section and a straight shape of the type illustrated in Figure 18 is provided; namely, initially the tubular conductor element 20 has a circular transversal section and is completely straight (on the market copper tubes with these characteristics are readily available and can therefore be used as a starting base for the tubular conductor element 20). Subsequently, the tubular conductor element 20 is shaped by mechanical deformations of plastic type to give the tubular conductor element 20 itself the final shape illustrated in Figure 13 (with the exception of the electrical terminals 25 which are separately built and then sealed to the remaining part of the tubular conductor element 20). When the final shape has been given to the tubular conductor element 20, the support body 22 of insulating material is over-moulded around the tubular conductor element 20; namely, the tubular conductor element 20 is inserted inside a mould in which the insulating material, which forms the support body 22 around the tubular conductor element 20, is injected (in this way the support body 22 incorporates on the inside thereof the tubular conductor element 20).

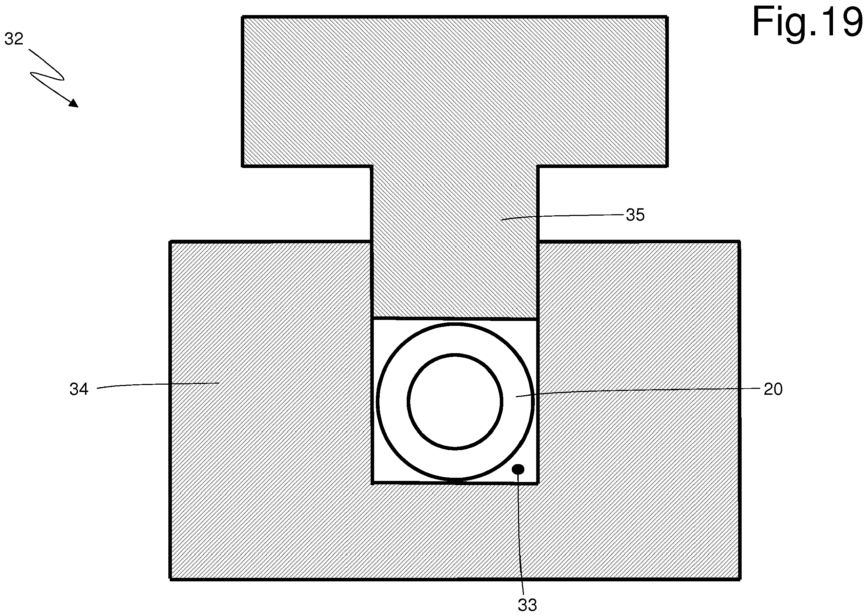

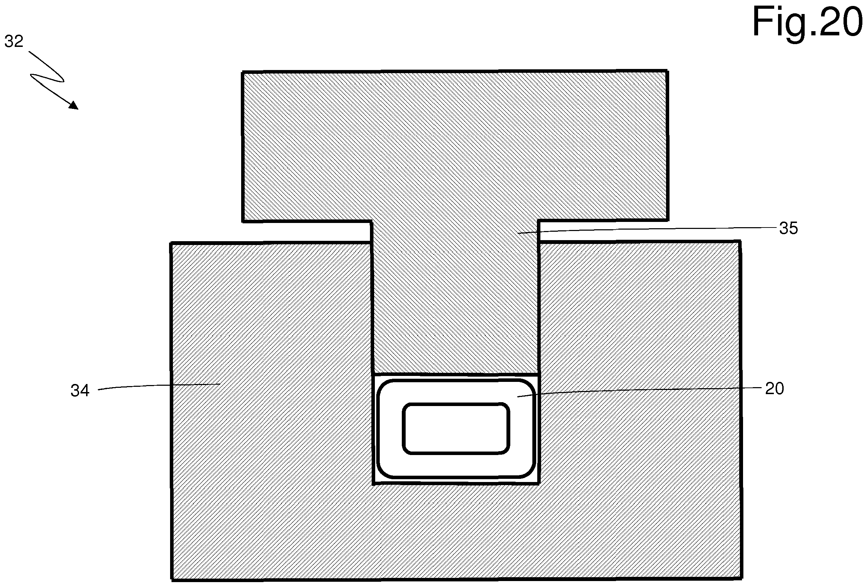

The mechanical processing by means of plastic deformation of the tubular conductor element 20 with a circular section allows to confer to the tubular conductor element 20 the two flat walls 21 in a central portion of the tubular conductor element 20. In particular, the mechanical processing by means of plastic deformation of the tubular conductor element 20 with a circular section involves giving a rectangular section at least to the central portion of the tubular conductor element 20. This processing is carried out, for example, by means of the tool 32 illustrated in Figures 19 and 20 comprising a parallelepiped shape deformation chamber 33 formed in a processing body 34; the size of the deformation chamber 33 is variable due to the action of a piston 35. In use, the central portion of the tubular conductor element 20 with a circular cross section is inserted into the deformation chamber 33 (as illustrated in Figure 19) and then the piston 35 is forcibly pushed into the deformation chamber 33 (as illustrated in Figure 20) so as to cause plastic deformation of the tubular conductor element 20 which then assumes the shape of the deformation chamber 33, namely assumes a rectangular cross-section.

Preferably, the support body 22 is over-moulded around the flat walls 21 of the tubular conductor element 20 and leaves the flat walls 21 uncovered, namely without covering the flat walls 21; in other words, the support body 22 is over-moulded around the tubular conductor element 20 so as to form the flat wall 23 which is coplanar with the flat walls 21 and surrounds the flat walls 21 (namely does not cover the flat walls 21 and leaves the flat walls 21 themselves exposed).

According to a possible embodiment, after having over-moulded the support body 22 around the tubular conductor element 20, each flat wall 21 of the tubular conductor element 20 is mechanically processed by means of chipping machining, (for example, by means of a miller), so as to obtain, in the flat wall 21, the corresponding tooth 29 which perpendicularly projects from the flat wall 21 itself. In this step, only the flat walls 21 of the tubular conductor element 20 which are initially projecting relative to the flat wall 23 of the support body 22 can be processed, or else both the flat walls 21 of the tubular conductor element 20, and the flat wall 23 of the support body 22 can be processed by chipping machining so as to keep the flat wall 23 coplanar with the flat walls 21.

According to an alternative embodiment, before the support body 22 is over-moulded around the tubular conductor element 20, each flat wall 21 is mechanically processed by means of chipping machining, (for example by means of a miller) so as to obtain, in the flat wall 21, the corresponding tooth 29 which perpendicularly projects from the flat wall 21 itself.

According to a further embodiment, the mechanical processing by means of plastic deformation of the tubular conductor element 20 with a circular section provides to form in each flat wall 21 the corresponding tooth 29 which perpendicularly projects from the flat wall 21; in other words, the deformation chamber 33 is shaped so as to also form the tooth 29 during the plastic deformation of the tubular conductor element 20 with a circular section.

The above-described methods for manufacturing the induction sealing head 16 have numerous advantages.

Firstly, the above-described methods for manufacturing the sealing head 16 allow to avoid producing a large quantity of *"noble"* material which is discarded (in particular from the metallic material forming the tubular conductor element 20, generally copper, which has a rather high cost); consequently, the above-described methods for manufacturing the induction sealing head 16 allow to minimize production costs.

Moreover, the above-described methods for manufacturing the sealing head 16 allow to reduce production times to a minimum.

## Claims

1. A method for manufacturing an induction sealing head (16) for an automatic machine (9); the manufacturing method comprises the steps of:
providing a tubular conductor element (20) with a circular section and a straight shape;
shaping the tubular conductor element (20) so as to give to the tubular conductor element (20) a final shape; and
over-moulding, around the tubular conductor element (20), a support body (22) of insulating material;
the manufacturing method is **characterized in that** it comprises, before over-moulding the support body (22) around the tubular conductor element (20), the further step of mechanically processing, through plastic deformation, the tubular conductor element (20) with a circular section, so as to form at least a first flat wall (21) in a central portion of the tubular conductor element (20).

2. A manufacturing method according to claim 1, wherein the step of mechanically processing, through plastic deformation, the tubular conductor element (20) with a circular section involves giving a rectangular section to the central portion of the tubular conductor element (20).

3. A manufacturing method according to claim 1 or 2, wherein the support body (22) is over-moulded around the first flat wall (21) leaving the first flat wall (21) uncovered, namely without covering the first flat wall (21).

4. A manufacturing method according to claim 3, wherein the support body (22) is over-moulded around the tubular conductor element (20) so as to form a second flat wall (23), which is coplanar to the first flat wall (21) and surrounds the first flat wall (21).

5. A manufacturing method according to any of the claims from 1 to 4 and comprising, after having over-moulded the support body (22) around the tubular conductor element (20), the further step of mechanically processing, through chipping machining, the first flat wall (21), so as to obtain, in the first flat wall (21), at least one tooth (29), which perpendicularly projects from the first flat wall (21).

6. A manufacturing method according to claim 5, wherein:
the support body (22) is over-moulded around the tubular conductor element (20) so as to form a second flat wall (23), which is coplanar to the first flat wall (21) and surrounds the first flat wall (21); and
the step of mechanically processing, through chipping machining, the first flat wall (21) involves also mechanically processing, through chipping machining, the second flat wall (23), so as to keep the second flat wall (23) coplanar to the first flat wall (21).

7. A manufacturing method according to any of the claims from 1 to 4 and comprising, before over-moulding the support body (22) around the tubular conductor element (20), the further step of mechanically processing, through chipping machining, the first flat wall (21), so as to obtain, in the first flat wall (21), at least one tooth (29), which perpendicularly projects from the first flat wall (21).

8. A manufacturing method according to any of the claims from 1 to 4, wherein the step of mechanically processing, through plastic deformation, the tubular conductor element (20) with a circular section involves obtaining, in the first flat wall (21), at least one tooth (29), which perpendicularly projects from the first flat wall (21).

9. A manufacturing method according to any of the claims from 1 to 8, wherein:
the tubular conductor element (20) is bent in a "U" shape so as to form two distinct and separate sealing areas, which are parallel to one another; and
in each sealing area there is obtained a corresponding first flat wall (21).

10. A manufacturing method according to claim 9, wherein each sealing area has its own tooth (29), which perpendicularly projects from the first flat wall (21).

## Patentansprüche

1. Verfahren zur Herstellung eines Induktionsversiegelungskopfes (16) für eine automatische Maschine (9); wobei das Herstellungsverfahren die folgenden Schritte umfasst:
Vorsehen eines rohrförmigen Leiterelements (20) mit einem kreisförmigen Querschnitt und einer geraden Form;
Formen des rohrförmigen Leiterelements (20), um dem rohrförmigen Leiterelement (20) seine endgültige Form zu geben; und
Aufformen eines Trägerkörpers (22) aus isolierendem Material um das rohrförmige Leiterelement (20);
das Herstellungsverfahren ist **dadurch gekennzeichnet, dass** es vor dem Aufformen des Trägerkörpers (22) um das rohrförmige Leiterelement (20) den weiteren Schritt des mechanischen Bearbeitens des rohrförmigen Leiterelements (20) mit einem runden Querschnitt durch plastisches Umformen umfasst, um zumindest eine erste flache Wand (21) in einem mittigen Abschnitt des rohrförmigen Leiterelements (20) auszubilden.

2. Herstellungsverfahren nach Anspruch 1, wobei der Schritt des mechanischen Bearbeitens des rohrförmigen Leiterelements (20) mit einem kreisförmigen Querschnitt durch plastisches Umformen beinhaltet, den mittigen Abschnitt des rohrförmigen Leiterelements (20) mit einem rechteckigen Querschnitt zu versehen.

3. Herstellungsverfahren nach Anspruch 1 oder 2, wobei der Trägerkörper (22) um die erste flache Wand (21) aufgeformt wird und die erste flache Wand (21) unbedeckt lässt, also die erste flache Wand (21) nicht bedeckt.

4. Herstellungsverfahren nach Anspruch 3, wobei der Trägerkörper (22) um das rohrförmige Leiterelement (20) aufgeformt wird, um eine zweite flache Wand (23) auszubilden, die zur ersten flachen Wand (21) komplanar ist und die erste flache Wand (21) umgibt.

5. Herstellungsverfahren nach einem der Ansprüche 1 bis 4, das nach dem Aufformen des Trägerkörpers (22) um das rohrförmige Leiterelement (20) den weiteren Schritt des mechanischen Bearbeitens der ersten flachen Wand (21) durch Zerspanungsbearbeitung umfasst, um in der ersten flachen Wand (21) mindestens einen Zahn (29) zu erhalten, der senkrecht von der ersten flachen Wand (21) vorsteht.

6. Herstellungsverfahren nach Anspruch 5, wobei:
der Trägerkörper (22) um das rohrförmige Leiterelement (20) aufgeformt wird, um eine zweite flache Wand (23) auszubilden, wie zur ersten flachen Wand (21) komplanar ist und die erste flache Wand (21) umgibt; und
der Schritt des mechanischen Bearbeitens der ersten flachen Wand (21) durch Zerspanungsbearbeitung auch das mechanische Bearbeiten der zweiten flachen Wand (23) durch Zerspanungsbearbeitung beinhaltet, um die zweite flache Wand (23) zu ersten flachen Wand (21) komplanar zu halten.

7. Herstellungsverfahren nach einem der Ansprüche 1 bis 4, das vor dem Aufformen des Trägerkörpers (22) um das rohrförmige Leiterelement (20) den weiteren Schritt des mechanischen Bearbeitens der ersten flachen Wand (21) durch Zerspanungsbearbeitung umfasst, um in der ersten flachen Wand (21) mindestens einen Zahn (29) zu erhalten, der senkrecht von der ersten flachen Wand (21) vorsteht.

8. Herstellungsverfahren nach einem der Ansprüche 1 bis 4, wobei der Schritt des mechanischen Bearbeitens des rohrförmigen Leiterelements (20) mit einem kreisförmigen Querschnitt durch plastisches Umformen das Erhalten mindestens eines Zahns (29) in der ersten flachen Wand (21) beinhaltet, der senkrecht von der ersten flachen Wand (21) vorsteht.

9. Herstellungsverfahren nach einem der Ansprüche 1 bis 8, wobei:
das rohrförmige Leiterelement (20) in eine U-Form gebogen ist, um zwei unterschiedliche und getrennte Versiegelungsflächen auszubilden, die parallel zueinander verlaufen; und
eine erste flache Wand (21) in jeder Versiegelungsfläche erhalten wird.

10. Herstellungsverfahren nach Anspruch 9, wobei jede Versiegelungsfläche ihren eigenen Zahn (29) aufweist, der senkrecht von der ersten flachen Wand (21) vorsteht.

## Revendications

1. Procédé de fabrication d'une tête de scellage par induction (16) pour une machine automatique (9) ; le procédé de fabrication comprenant les étapes suivantes:
fournir un élément conducteur tubulaire (20) présentant une section circulaire et une forme droite;
former l'élément conducteur tubulaire (20) de manière à conférer à l'élément conducteur tubulaire (20) une forme finale ; et
surmouler, autour de l'élément conducteur tubulaire (20), un corps de support (22) constitué d'un matériau isolant ;
le procédé de fabrication étant **caractérisé en ce qu'**il comprend, avant le surmoulage du corps de support (22) autour de l'élément conducteur tubulaire (20), l'étape supplémentaire consistant à traiter mécaniquement, par déformation plastique, l'élément conducteur tubulaire (20) présentant une section circulaire, de manière à former au moins une première paroi plate (21) dans une partie centrale de l'élément conducteur tubulaire (20).

2. Procédé de fabrication selon la revendication 1, dans lequel l'étape de traitement mécanique, par déformation plastique, de l'élément conducteur tubulaire (20) présentant une section circulaire implique de conférer une section rectangulaire à la partie centrale de l'élément conducteur tubulaire (20).

3. Procédé de fabrication selon la revendication 1 ou 2, dans lequel le corps de support (22) est surmoulé autour de la première paroi plate (21) en laissant la première paroi plate (21) découverte, en d'autres termes sans couvrir la première paroi plate (21).

4. Procédé de fabrication selon la revendication 3, dans lequel le corps de support (22) est surmoulé autour de l'élément conducteur tubulaire (20) de manière à former une seconde paroi plate (23), qui est coplanaire à la première paroi plate (21) et qui entoure la première paroi plate (21).

5. Procédé de fabrication selon l'une quelconque des revendications 1 à 4 et comprenant, après le surmoulage du corps de support (22) autour de l'élément conducteur tubulaire (20), l'étape supplémentaire de traitement mécanique, par usinage par enlèvement de copeaux, de la première paroi plate (21), de manière à obtenir, dans la première paroi plate (21), au moins une dent (29) qui fait saillie perpendiculairement à partir de la première paroi plate (21).

6. Procédé de fabrication selon la revendication 5, dans lequel :
le corps de support (22) est surmoulé autour de l'élément conducteur tubulaire (20) de manière à former une seconde paroi plate (23), qui est coplanaire à la première paroi plate (21) et qui entoure la première paroi plate (21) ; et
l'étape de traitement mécanique, par usinage par enlèvement de copeaux, de la première paroi plate (21) implique également un traitement mécanique, par usinage par enlèvement de copeaux, de la seconde paroi plate (23), de manière à maintenir la seconde paroi plate (23) coplanaire à la première paroi plate (21).

7. Procédé de fabrication selon l'une quelconque des revendications 1 à 4 et comprenant, avant le surmoulage du corps de support (22) autour de l'élément conducteur tubulaire (20), l'étape supplémentaire de traitement mécanique, par usinage par enlèvement de copeaux, de la première paroi plate (21), de manière à obtenir, dans la première paroi plate (21), au moins une dent (29) qui fait saillie perpendiculairement à partir de la première paroi plate (21).

8. Procédé de fabrication selon l'une quelconque des revendications 1 à 4, dans lequel l'étape de traitement mécanique, par déformation plastique, de l'élément conducteur tubulaire (20) présentant une section circulaire implique d'obtenir, dans la première paroi plate (21), au moins une dent (29) qui fait saillie perpendiculairement à partir de la première paroi plate (21).

9. Procédé de fabrication selon l'une quelconque des revendications 1 à 8, dans lequel :
l'élément conducteur tubulaire (20) est plié en forme de "U" de manière à former deux régions de scellage distinctes et séparées, qui sont parallèles l'une à l'autre ; et
dans chaque région de scellage une première paroi plate correspondante (21) est obtenue.

10. Procédé de fabrication selon la revendication 9, dans lequel chaque région de scellage comporte sa propre dent (29), qui fait saillie perpendiculairement à partir de la première paroi plate (21).
